# EUROPEAN PATENT SPECIFICATION

(11) **EP 3 626 047 B1**
(45) Date of publication and mention of the grant of the patent: **19.05.2021**
(21) Application number: 18195611.1
(22) Date of filing: 20.09.2018
(51) Int. Cl.: A01G 9/14, A01G 13/02

(54) **A METHOD OF APPLYING A TRANSPARENT FOIL MATERIAL ON A GABLE ROOF OF A GREENHOUSE, A FOIL SUPPLYING DEVICE AND AN INSTALLING DEVICE**
VERFAHREN ZUM AUFBRINGEN EINES TRANSPARENTEN FOLIENMATERIALS AUF EIN GIEBELDACH EINES GEWÄCHSHAUSES, EINE FOLIENZUFÜHRVORRICHTUNG UND EINE INSTALLATIONSVORRICHTUNG
PROCÉDÉ D'APPLICATION D'UN MATÉRIAU À FEUILLE TRANSPARENTE SUR UN TOIT À PIGNON D'UNE SERRE, DISPOSITIF D'ALIMENTATION DE FEUILLES ET DISPOSITIF D'INSTALLATION

(43) Date of publication of application: 25.03.2020
(73) Proprietor: Boal Systemen B.V., 2691 HC 's Gravenzande (NL)
(72) Inventor: VAN HOLSTEIJN, Gerardus Jacobus Maria, 2294 CM Wateringen (NL)
(74) Representative: De Vries & Metman

(56) References cited:
- WO-A1-2016/027926
- WO-A2-2017/153782
- ES-A1- 2 195 685
- FR-A1- 2 897 604

## Description

The present invention relates to a method of applying a transparent foil material on a gable roof of a greenhouse, wherein the gable roof comprises a roof frame including two gutter profiles, a ridge profile and two intermediate profiles extending parallel to each other, wherein the intermediate profiles are located between the ridge profile and the respective gutter profiles, wherein at either side of the ridge profile the gutter profile, the ridge profile and the intermediate profile are interconnected through lateral beams extending in transverse direction of said profiles, wherein the roof also comprises two window frames, located at either side of the ridge profile, each window frame having an upper window beam which is mounted to the ridge profile and rotatable with respect to the ridge profile about a pivot axis extending in longitudinal direction of the ridge profile and a lower window beam located at a distance from the upper window beam, wherein each window frame is rotatable between a closed position in which the lower window beam lies at the intermediate profile and an open position in which the lower window beam lies at a distance from the intermediate profile above the intermediate profile.

A greenhouse as described above is also called a Venlo-type greenhouse. WO 2017/153782 discloses a method of applying a film to a skeletal structure of a Venlo-type greenhouse. A transparent foil material acts as a skin or film on the roof and can protect products in the greenhouse against wind, temperature shocks and pests such as birds. The foil material must allow UV light to access the growing area.

WO 2016/027926 is related to a vinyl greenhouse universal apparatus which can stably and efficiently install a greenhouse and replace and repair vinyl at the upper part of a vinyl greenhouse. The vinyl greenhouse universal apparatus enables a worker to get on top of a greenhouse so as to unfold and fix vinyl while moving forward and backward on the greenhouse, thereby enabling work to be performed with little influence from the wind and to be performed easily even when installing large-sized vinyl. The vinyl greenhouse universal apparatus allows a worker to get on top of a greenhouse and perform work thereon such that a risk of accident can be remarkably reduced compared with a conventional manner of climbing up a ladder to a greenhouse so as to perform fixing work thereon.

FR 2 897 604 is related to a device which has an inverted U-shaped portico extending in a vertical plane, where the portico is adapted to span over a longitudinal support. The portico has a central part and two lateral columns. Each column is provided with a lateral support unit along a longitudinal side of the support for permitting displacement of the support to its extension plane. The portico has a front face and a rear face with respect to its displacement. The portico has two pairs of bearings for receiving and positioning a roller of a plastic film in a horizontal position.

ES 2 195 685 is related to a machine for laying out greenhouse covers and corresponding method for cover installation. The machine includes a machine frame with tilted columns fitted with ladder steps, a central bridge with a handle for turning a roller of plastic covering and pairs of rolling wheels. A method includes stages for placing the machine with its rolling wheels into the drainage channels of the greenhouse; then moving said machine on its rolling wheels; the sheet of plastic covering is unrolled from its roller using the handle from the central bridge of the machine to extend it over the covering structure of the greenhouse.

An object of the invention is to provide an efficient method of applying a transparent foil material on a gable roof of a greenhouse as described above.

This object is accomplished with the method according to claim 1.

An advantage of the invention is that a single sheet is used for covering both window frames which leads to a quicker installation than applying two separate sheets at the respective window frames. Furthermore, positioning the window frames in their open positions means that the window frames can be positioned in a less inclined orientation which makes the process of fixing easier for operators.

A well-known transparent foil for a greenhouse is ETFE, which is a plastics material that is stable once installed under tension and that tension is retained despite aging over time. It has good transient properties to UV along with thermal insulation capabilities.

The width of the piece of the foil material may be such that it overlaps the window frames in order to have sufficient foil material to fix to the lower window beams.

The piece of the foil material is stretched in longitudinal direction of the ridge profile before the step of fixing in order to minimize waving of the piece of the foil material under windy conditions. It can be stretched when one end portion of the piece, as seen in longitudinal direction of the ridge profile, is already fixed to the window frames.

Preferably, the window frames have a substantially horizontal orientation when positioned in the open position, which makes it easy to lay the piece of foil onto the horizontally positioned window frames. The window frames may be arranged such that in the horizontal positions the window frames are flush to each other.

The piece of the foil material may be part of a continuous sheet, for example supplied in the form of a roll, hence forming a first piece wherein the first piece is laid on the window frames and fixed to at least the lower window beams over a predetermined distance along the lower window beams before laying and fixing a second piece of the continuous sheet on the window frames next to the fixed first piece. Fixing the first piece before laying a second piece of the continuous sheet provides the opportunity to apply the foil material step-by-step along the discrete predetermined distances, which enables operators to keep working under windy conditions, in particular when the respective pieces are stretched in longitudinal direction of the ridge profile before the step of fixing. It is noted that the predetermined distance is smaller than the length of each of the lower window beams.

In a practical embodiment the first and second pieces are fixed to the lower window beams by mounting separate clamping elements to the lower window beams so as to clamp the foil material between the respective clamping elements and the lower window beams, wherein each clamping element has a length corresponding to the predetermined distance.

The foil material may also be fixed to the ridge profile. This provides a fixing location of the foil material close to the upper window beam. The window frames may be mounted to the ridge profile such that a portion of the ridge profile extends between the window frames. The foil material can be fixed to that portion, for example by applying a strip which sandwiches the foil material between the strip and the mentioned portion of the ridge profile.

The foil material may be fixed to the ridge profile through a ridge cover strip, wherein the ridge cover strip and the ridge profile are shaped such that upon fixing the foil material is clamped between the ridge cover strip and the ridge profile, whereas the foil material is tensioned between the ridge profile and the respective lower window beams.

In addition to fixing the foil material to the ridge profile and the lower window beams, the foil material can also be fixed to lateral window beams that extend between the upper window beam and the lower window beam of each window frame.

Further pieces of the foil material may be laid onto the roof frame to cover respective lower roof sections, each lower roof section extending from the intermediate profile to the gutter profile at either side of the ridge profile, and fixing the further pieces to the gutter profiles and the intermediate profiles. The further pieces are applied at the lower roof sections at either side of the ridge profile. Hence, when the window frames are closed the entire roof is covered by transparent foil.

The further pieces of the foil material may be stretched in longitudinal direction of the gutter profiles before the step of fixing in order to minimize waving of the foil material under windy conditions.

The further pieces may be part of respective continuous sheets, for example supplied in the form of rolls, hence forming further first pieces, wherein the further first pieces are laid on the respective lower roof sections and fixed to the gutter profiles and the intermediate profiles over a predetermined distance along the gutter profiles before laying and fixing further second pieces of the continuous sheets on the lower roof sections next to the fixed further first pieces. Similar to applying the foil material to the window frames as described above, fixing the further first piece before laying the further second piece of the continuous sheet provides the opportunity to apply the foil material step-by-step along the discrete predetermined distances, which enables operators to keep working under windy conditions, in particular when the respective further pieces are stretched in longitudinal direction of the gutter profile before the step of fixing. The predetermined distances are smaller than the lengths of the gutter profiles.

In a practical embodiment the further first and second pieces at the lower roof sections are fixed by mounting separate clamping elements to the intermediate profiles and the gutter profiles so as to clamp the foil material between the respective clamping elements, on the one hand, and the intermediate profiles and the gutter profiles, on the other hand, wherein each clamping element has a length corresponding to the predetermined distance.

The invention is also related to a foil supplying device as defined in claim 11. The foil supplying device can be used to supply three pieces of foil material for a gable roof as described above. The rolls at the lateral portions may be inclined at a similar angle as a gable roof of a greenhouse.

The rolls at the lateral portions are located below the roll at the central portion and partly overlap the roll at the central portion, since in this embodiment parts of the rolls at the lateral portions can move along the gutter profiles and remain below the open window frames in order to use the method as described above. The overlap allows the foil material at the lower roof sections to overlap the intermediate profile.

In an advantageous embodiment at least one of the wheels and the rolls are provided with brakes, since this provides the opportunity to roll-out the foil material from a roll, then brake the roll and move the foil supplying device further in order to stretch the foil material between the stationary roll and a portion of the foil material which is already fixed to the roof, and brake the at least one wheel such that the foil material keeps its tension before the step of fixing.

In an installing device for installing a transparent foil material on a gable roof of a greenhouse, wherein the gable roof comprises a roof frame including two gutter profiles, a ridge profile and two intermediate profiles extending parallel to each other, wherein the intermediate profiles are located between the ridge profile and the respective gutter profiles, wherein at either side of the ridge profile the gutter profile, the ridge profile and the intermediate profile are interconnected through lateral beams extending in transverse direction of said profiles, wherein the roof also comprises two window frames, located at either side of the ridge profile, each window frame having an upper window beam which is mounted to the ridge profile and rotatable with respect to the ridge profile about a pivot axis extending in longitudinal direction of the ridge profile and a lower window beam located at a distance from the upper window beam, wherein each window frame is rotatable between a closed position in which the lower window beam lies at the intermediate profile and an open position in which the lower window beam lies at a distance from the intermediate profile above the intermediate profile, the installing device has a structure including wheels for running on one of the gutter profiles and a skid for sliding on the lateral beams above the intermediate profile at one side of the ridge profile. Since the wheels run on the gutter profile and the skid slides on the lateral beams beyond the intermediate profile as seen from the gutter profile, the installing device can be located above the lower roof section where a piece of the foil material has to be fixed to the gutter profile and the intermediate profile without damaging the foil material.

The invention will hereafter be elucidated with reference to very schematic drawings showing an embodiment of the invention by way of example.
Fig. 1 is a sectional view of a part of a roof of a greenhouse which is covered by a transparent foil by means of a method according to the invention.
Fig. 2 is an enlarged view of a part of the roof as indicated by II in Fig. 1.
Fig. 2a is an enlarged view of a part of the roof as indicated by IIa in Fig. 2.
Fig. 3 is an enlarged view of another part of the roof as indicated by III in Fig. 1.
Fig. 4 is an enlarged view of still another part of the roof as indicated by IV in Fig. 1.
Fig. 5 is a front view of a foil supplying device according to the invention, which is located on the roof of the greenhouse of Fig. 1.
Fig. 6 is a perspective view of the device as shown in Fig. 5.
Fig. 7 is a similar view as Fig. 6, but seen from a different side.
Fig. 8 is a perspective view of an installing device according to the invention, which is located on the roof of the greenhouse of Fig. 1.
Fig. 9 is a sectional view of a lateral beam at an intermediate profile of the roof as shown Fig. 8.
Fig. 10 is an enlarged view of a part of the installing device as indicated by X in Fig. 8.
Figs. 11-14 are enlarged perspective views of parts of the foil supplying device as indicated by XI-XIV, respectively, in Fig. 6.
Figs. 15 and 16 are different views of pliers for inserting a clamping element into a groove.
Figs. 17 and 18 are a side view and a perspective view, respectively, of a flanged rod for temporarily fixing the foil supplying device to a gutter profile.

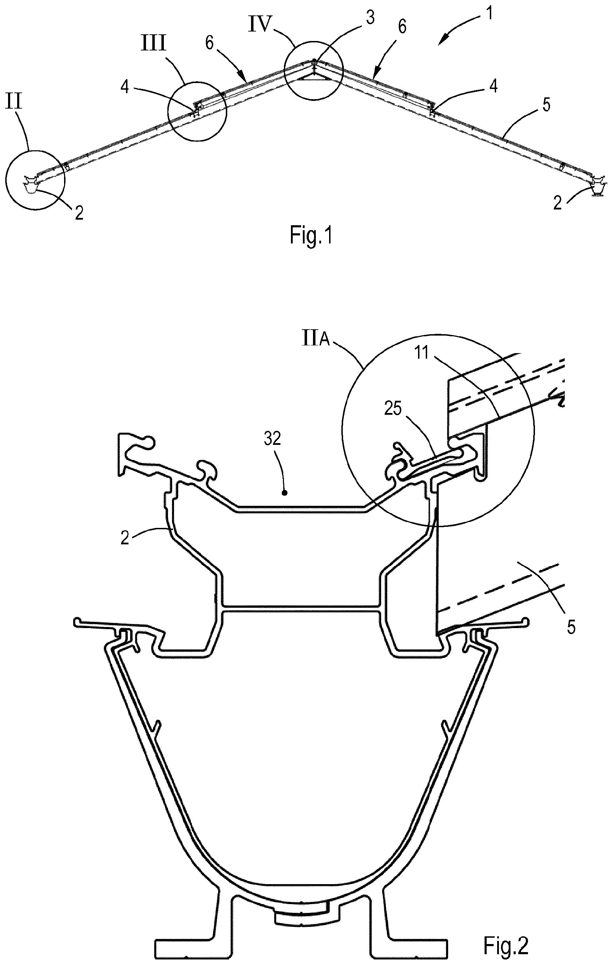

Fig. 1 shows a part of a roof 1 of a greenhouse. The roof 1 has a plurality of gable roof sections and Fig. 1 shows one roof section. The part of the roof 1 as shown in Fig. 1 comprises a roof frame which includes two gutter profiles 2, a ridge profile 3 and two intermediate profiles 4. The profiles 2-4 extend parallel to each other in longitudinal direction of the roof 1. The ridge profile 3 lies at a higher level than the gutter profiles 2 whereas the intermediate profiles 4 lie between the ridge profile 3 and the respective gutter profiles 2 at either side of the ridge profile 3.

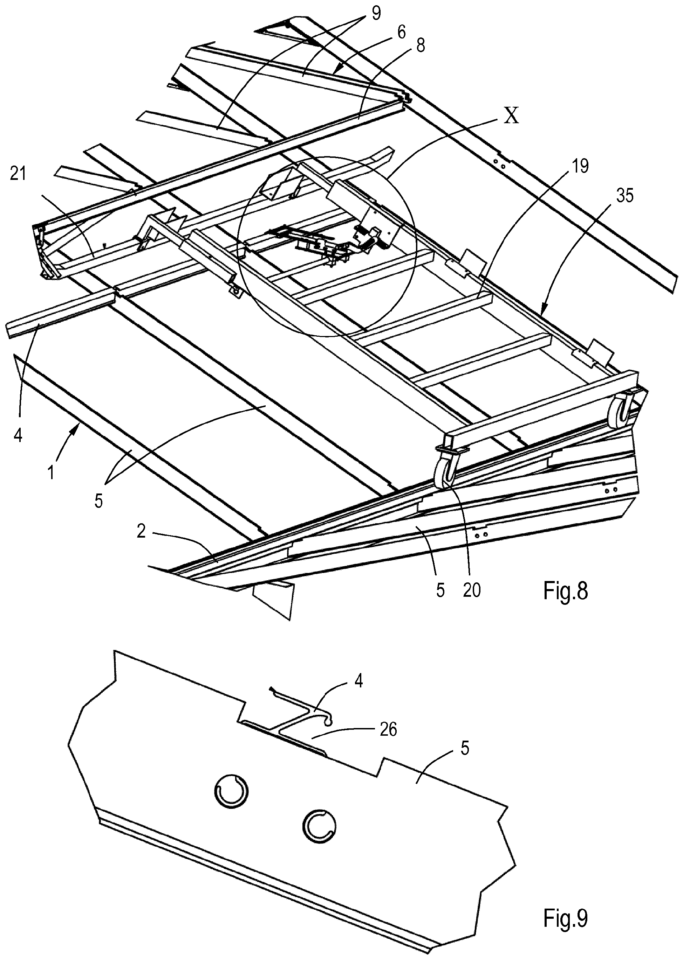

Each of the gutter profiles 2 is connected to the ridge profile 3 and the corresponding intermediate profiles 4 through lateral beams 5 so as to form a rigid frame structure. The lateral beams 5 extend in transverse direction of the gutter profiles 2, the ridge profile 3 and the intermediate profiles 4. It can be seen in Fig. 8 that the intermediate profile 4 is formed of separate pieces which are fixed to the lateral beams 5, whereas the lateral beams are continuous between the ridge profile 3 and the gutter profile 2. It is also possible that each lateral beam 5 comprises separate pieces which are fixed to a continuous intermediate profile 4.

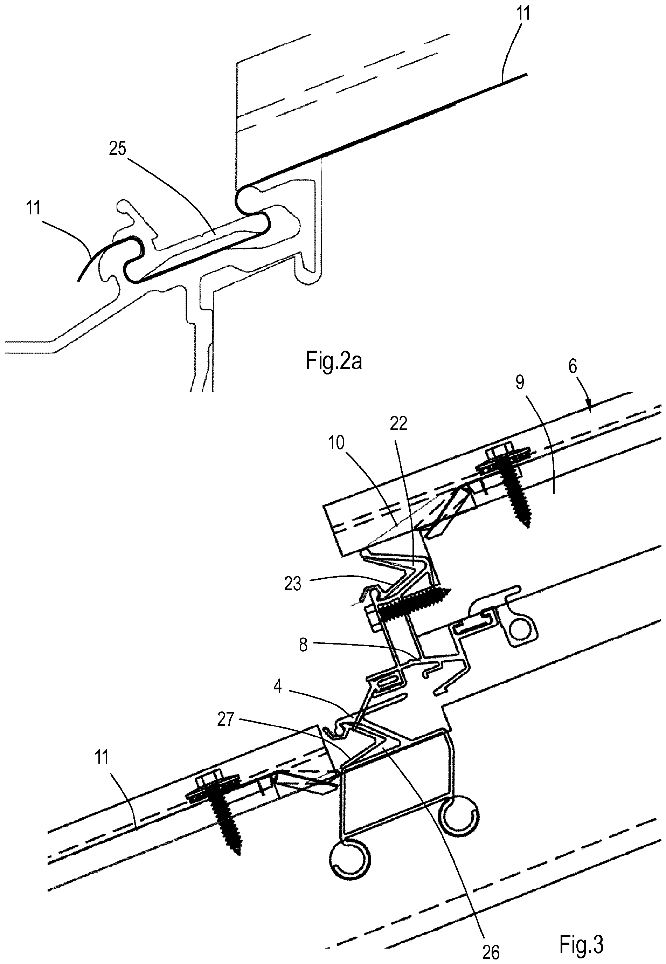

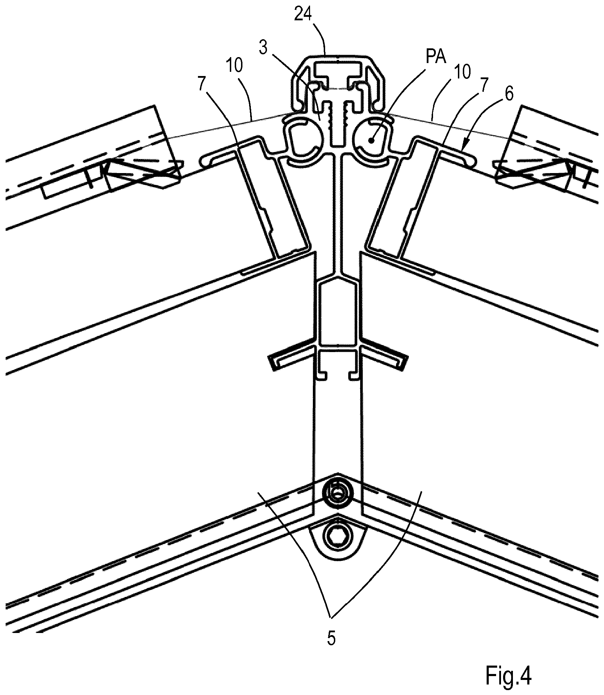

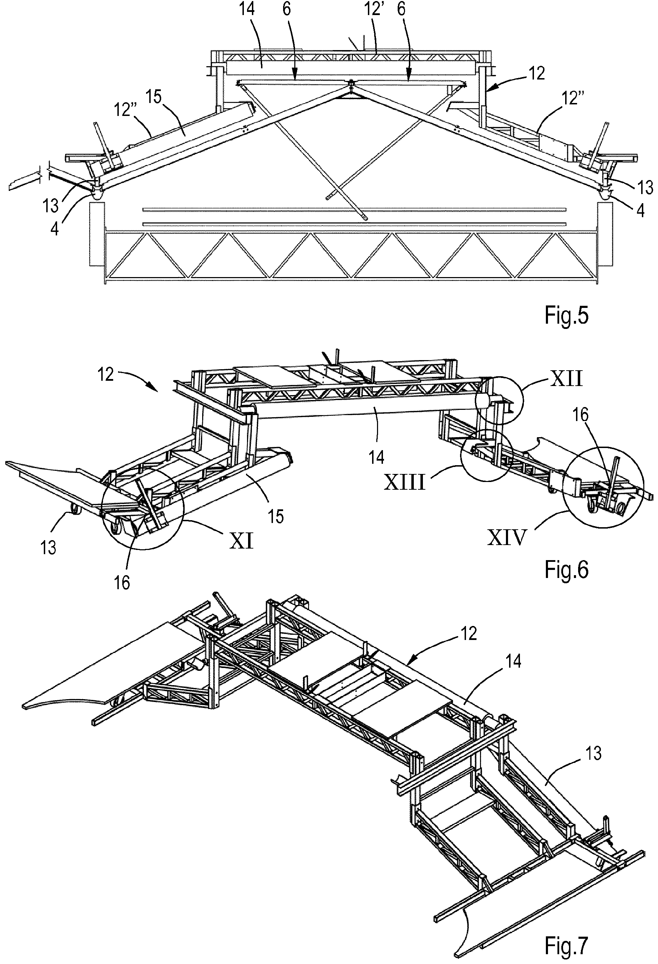

The part of the roof 1 as shown in Fig. 1 also comprises two window frames 6 which serve to create ventilation openings of the greenhouse at either side of the ridge profile 3. Each of the window frames 6 is rotatable between an open position and a closed position. The open positions are visible in Figs. 5 and 8 and the closed positions are visible in Figs. 1 and 3. Each of the window frames 6 is provided with an upper window beam 7 (see Fig. 4), a lower window beam 8 (see Fig. 3) and lateral window beams 9 (see Fig. 8). The upper window beam 7 and the lower window beam 8 are fixed to each other through the lateral window beams 9 which extend transversely to the upper and lower window beams 7, 8. In the closed positions of the window frames 6 the lower window beams 8 lie on the respective intermediate profiles 4, as shown in Fig. 3. In the open positions of the window frames 6 the lower window beams 8 lie at a distance above the intermediate profiles 4. Each of the upper window beams 7 is mounted to the ridge profile 3 and rotatable with respect to the ridge profile 3 about a pivot axis PA which extends parallel to the ridge profile 3, see Fig. 4.

The roof 1 is covered by a transparent foil material. The window frames 6 are provided with a window sheet 10 of the foil material, as shown in Figs. 3 and 4, whereas the roof frame is provided with lower roof sheets 11 between the gutter profile 2 and the intermediate profile 4 at either side of the ridge profile 3, see Figs. 2, 2a and 3. The region of the roof frame that extends from the gutter profile 2 to the intermediate profile 3 forms a lower roof section.

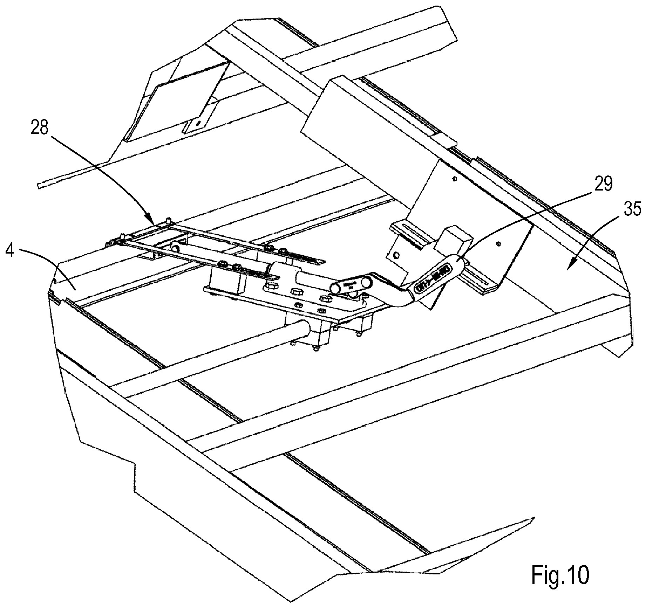

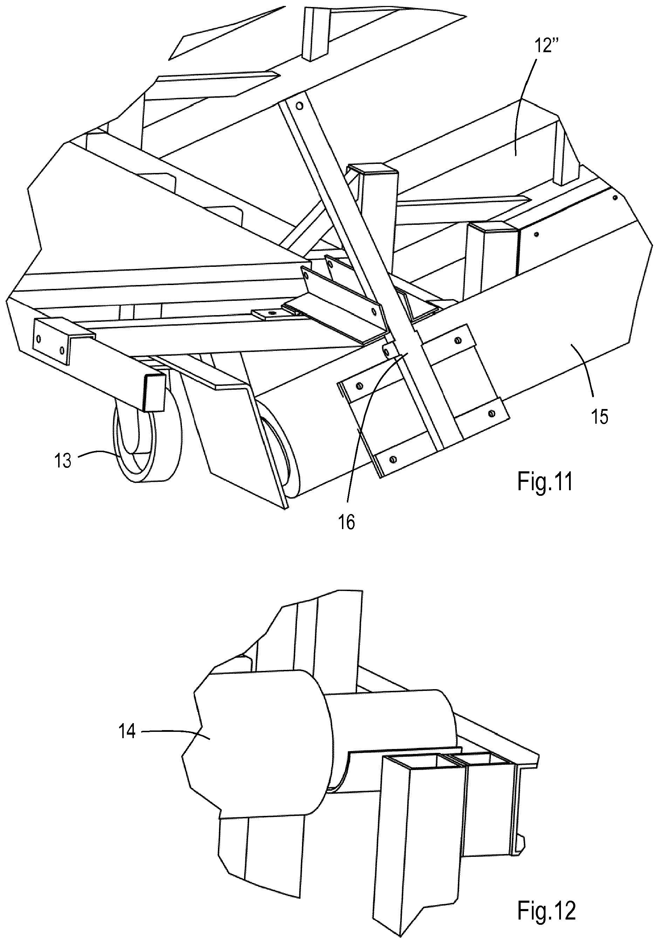

There are two devices for assisting operators to install the window sheet 10 and the lower roof sheets 11 to the window frames 6 and the lower roof sections, respectively: Figs. 5-7 show a foil supplying device 12 and Fig. 8 shows an installing device 35. Figs. 11-14 show detailed parts of the foil supplying device 12, whereas Fig. 10 shows a detailed part of the installing device 35.

The foil supplying device 12 has a bridge-shaped structure including a horizontally oriented central portion 12' and two inclined lateral portions 12" at either side of the central portion 12'. The foil supplying device 12 is provided with wheels 13, in this case four wheels 13, which run on the neighbouring gutter profiles 4. The wheels 13 may be provided with brakes (not shown). The foil supplying device 12 has three rolls of foil material: a window roll 14 is located at the central portion 12 and extends horizontally, and two side rolls 15 are located at the respective lateral portions 12" and are inclined with respect to the horizontal. In Figs. 5-7 one side roll 15 is not shown for explanatory reasons. The foil supplying device 12 is also provided with several platforms at different locations in order to provide a comfortable work place for operators who install the foil material.

The window roll 14 and the side rolls 15 are secured to the bridge-shaped structure upon respective spindles. The widths of the foil material on rolls 14, 15 are such that the foil material extends across the window frames 6 and the lower roof sections with an edge overlap. The window roll 14 supplies the foil material to form the window sheet 10 and the side rolls 15 supply the foil material to form the lower roof sheets 11.

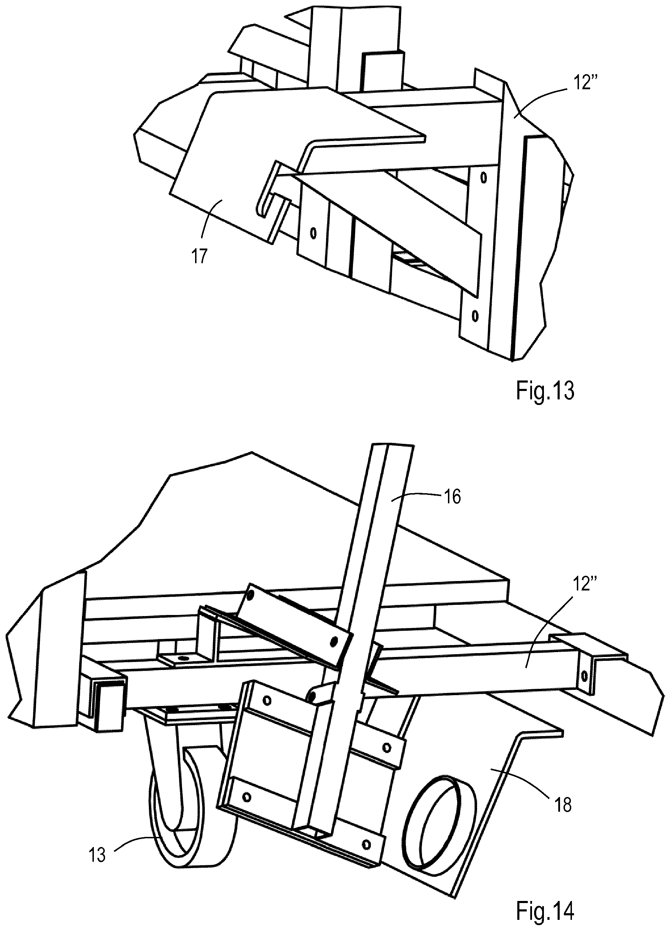

Fig. 11 shows a brake 16 which can be used to avoid undesired rotation of the side roll 15, for example when the rolled-out foil material needs to be kept under tension. Fig. 12 shows in detail how the window roll 14 at the central portion 12' is supported. It can be seen that the foil material is wound about a spindle which projects at opposite sides of the foil material in order to be supported at its ends. Figs. 13 and 14 show supports 17, 18 of the side roll 15 at one of the lateral portions 12" and the brake 16. Returning to Fig. 5 it can be seen that the side rolls 15 are located below the window roll 14 and partly overlap the window roll 14 at the central portion 12'. This means that the window frames 6 must be in their open positions when using the foil supplying device 12 in order to allow the side rolls 15 to pass. The brakes 16 may also be replaced by friction means between the spindles and their supports. Due to braking the window roll 14 and the side rolls 15 the stretch in longitudinal direction of the foil material may be about 1%. Such a stretch can be achieved by braking the respective rolls 14, 15 and subsequently moving the foil supplying device 12 forwardly over a certain distance. When braking the wheels 13 in that position the foil material is kept under tension.

The installing device 35 as shown in Figs. 8 and 10 enables an operator to fix the foil material to the lower window beams 8, the lateral beams 5 and the intermediate profile 4. The installing device 35 has a support structure 19 and two wheels 20 at one side of the support structure 19 which run on the gutter profile 2. An opposite side of the support structure 19 is provided with a skid 21 for sliding on the lateral beams 5 above the intermediate profile 4 at one side of the ridge profile 3. The position of the skid 21 is adjustable with respect to the remainder of the support structure 19 such that it can rest on a plurality of lateral beams 5 at a location between the ridge profile 3 and the intermediate profile 4. This provides the opportunity to fix the lower roof sheet 11 below the installing device 35 without pressing the lower roof sheet 11 between the installing device 35, on the one hand, and the lateral beams 5 between the intermediate profile 4 and the gutter profile 2, on the other hand. Fig. 8 shows the installing device 35 at one side of the ridge profile 3, but a similar installing device 35 can be used at the opposite side of the ridge profile 3.

The method of applying the foil material onto the window frame 6 is as follows. The window frames 6 are opened and positioned in a horizontal position as shown in Fig. 5. The foil supplying device 12 is moved in longitudinal direction of the gutter profiles 4, whereas the foil material is rolled out from the window roll 14 and laid down onto the window frames 6. After moving the foil supplying device 12 over a predefined distance, for example 1.25 m the foil supplying device 12 is stopped. In this situation the foil material forms the window sheet 10 which can be fixed to the window frames 6. When a portion of the foil material is already fixed to the window frames the foil material can be tensioned in longitudinal direction of the ridge profile 3 by braking the window roll 14 and moving the foil supplying device 12 a small distance further. The tension can be maintained by braking the wheels 13 in the latter position, after which an operator can fix the window sheet 10 to the window frames 6.

First, one side of the window sheet 10 is fixed to the lower window beam 8 of one of the window frames 6. Each of the lower window beams 8 has a V-shaped groove 22 in which a flexible V-shaped clamping element 23 can be clamped, see Fig. 3. The clamping elements 23 are separate elements which have a length of 1.25 m, for example.

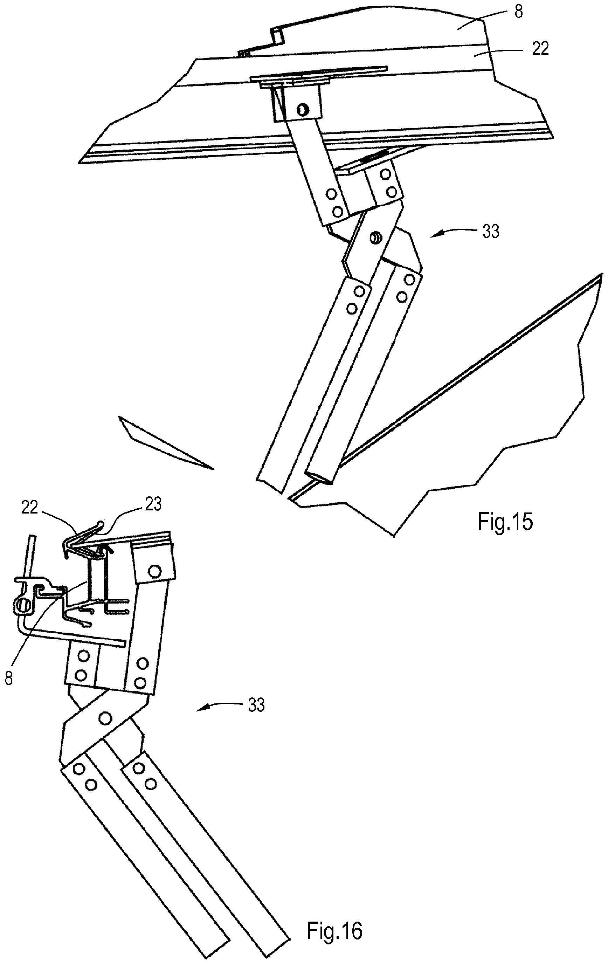

The clamping action is facilitated by means of a dedicated hand tool in the form of pliers 33 as shown in Figs. 15 and 16. The operator can stand on the installing device 35 during fixing the clamping element 23 in the groove 22. After fixing the window sheet 10 to the lower window beam 8 of one of the window frames 6 it can be fixed in the same way to the lower window beam 8 of the window frame 6 at the opposite side of the ridge profile 3. Before fixing, the window sheet 10 may be stretched by hand. For installing the foil material two installing devices 35 may be used by two operators working at opposite sides of the ridge profile 3. The V-shaped clamping element 23 may be made of plastic, for example PVC. The stretch on the window sheet 10 as a consequence of inserting the clamping element 23 into the corresponding groove 22 may be about 1%. The foil material is fixed over a predefined length of for example 1.25 m before a next piece of 1.25 m is fixed.

It is noted that before fixing the window sheet 10 to the lower window beams 8 the window sheet 10 overlaps the window frames 6 at opposite sides sufficiently to allow the window sheet 10 to follow the circumference of the clamping element 23 in the groove 22.

In a next step the window sheet 10 is fixed to the ridge profile 3 by means of a ridge cover strip 24, as shown in Fig. 4. The ridge cover strip 24 and the ridge profile 3 are shaped such that the window sheet 10 is further stretched upon fixing them to each other. The window sheet 10 is fixed to the ridge profile 3 close to the pivot axes PA, which means that opening and closing of the window frames 6 has a negligible effect on stretch in the window sheet 10. In a further step the window sheet 10 is fixed to the lateral window beams 9 of the window frames 6 by means of lateral window strips (not shown). The lateral window strips and the lateral window beams 9 are also shaped such that the window sheet 10 is further stretched upon fixing them to each other. The lateral window strips can be fixed by an operator who sits or lies on one of the platforms at the central portion 12' of the foil supplying device 12.

After fixing a first piece of the window sheet 10 to the lower window beams 8, the ridge profile 3 and the lateral window beams 9, the brakes of the window roll 14 and the wheels 13 of the foil supplying device 12 can be released. Then the foil supplying device 12 can be moved forwardly in order to lay a second piece of the window sheet 10 onto the window frames 6 which can be stretched and fixed in a similar way as the first piece. This can be repeated until the entire window frames 6 are provided with the foil material.

The method of applying the foil material onto the roof frame between the gutter profiles 2 and the intermediate profiles 4, i.e. the lower roof sections, is as follows. The window frames 6 are opened as shown in Fig. 5. The foil supplying device 12 is moved in longitudinal direction of the gutter profiles 4, whereas the foil material from the side rolls 15 is rolled out and laid down onto the gutter profile 2, the intermediate profile 4 and the lateral window beams 9. After moving the foil supplying device 12 over a predefined distance, for example 1.25 m the foil supplying device 12 is stopped. In this situation the foil material forms the lower roof sheet 11, which can be fixed to the gutter profile 2, the intermediate profile 4 and the lateral window beams 5. The foil material can be stretched by braking the side roll 15 by the brake 16 and moving the foil supplying device 12 forwardly, after which an operator can fix the lower roof sheet 11 to the lower roof section.

First, one side of the lower roof sheet 11 is fixed to the gutter profile 2 by means of a dedicated clamping strip 25, as shown in Figs. 2 and 2a. The lower roof sheet 11 extends along the circumference of the clamping strip 25 and is inserted into a mating groove, which is located next to an elongate recess 32 in the centre of the gutter profile 2. It is noted that the wheels 13 of the foil supplying device 12 and the wheels 20 of the installing device 35 run on a bottom surface of the elongate recess 32 of the gutter profile 2. The clamping strip 25 can be fixed by an operator who lies on a platform at the lateral portion 12" of the foil supplying device 12. In a next step, the opposite side of the lower roof sheet 11 is fixed to the intermediate profile 4, as shown in Fig. 3. The intermediate profile 4 has a V-shaped groove 26 in which a flexible V-shaped clamping element 27 can be clamped, see Figs. 3 and 9, similar to the groove 22 and V-shaped clamping element 23 at the lower window beam 8. The clamping action is facilitated by means of dedicated pliers 28 which can be operated by a handle 29 on the installing device 35 via a mechanical transmission. The operator can stand on the installing device 35 when fixing the clamping element 27 in the groove 26. The lower roof sheet 11 is further fixed to the lateral beams 5 by means of lateral beam strips (not shown). The lateral beam strips and the lateral beams 5 are shaped such that the lower roof sheet 11 is further stretched upon fixing them to each other. This means that the foil material is already stretched before fixing and further stretched upon fixing the clamping elements 27 and the lateral beam strips.

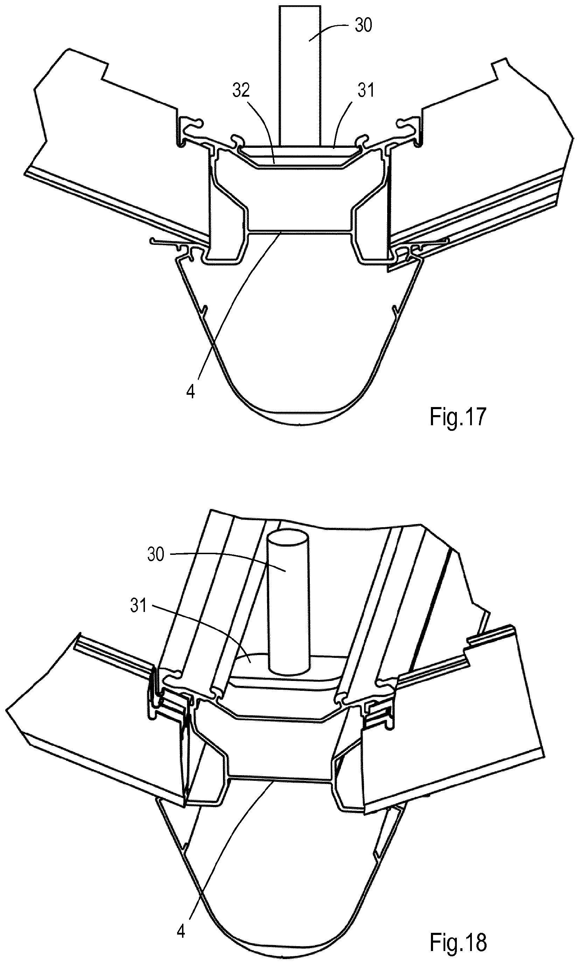

In order to move the foil supplying device 12 on the roof 1 an operator can use a rod 30 having an elongate flange 31 at its lower end, see Figs. 17 and 18. The flanged rod can be temporarily fixed to the gutter profile 4 by inserting the flange 31 into the elongate recess 32 and turning the rod 30 such that the flange 31 undercuts inwardly protruding edges of the elongate recess 32. When the rod 30 is fixed with respect to the gutter profile 2 the operator can exert a force between the foil supplying device 12 and the rod 30 in order to move the foil supplying device 12. The flanged rod 30, 31 can also be used to temporarily clamp the overlapping lower roof sheet 11 on the gutter profile 4 before fixing it. The installing device 35 can be moved by an operator by exerting a force on the installing device 35 in longitudinal direction of the gutter profiles 2 while holding a lateral beam 5 of the lower roof section.

It is noted that the window roll 14 and the side rolls 15 can also be rolled out simultaneously over a predetermined distance, for example 1.25 m, after which the window sheet 10 and the lower roof sheets 11 are fixed to the lower window beams 8 and to the intermediate profile 4 and the gutter profiles 2, respectively.

The foil supplying device 12 and the installing device 35 can move behind each other on the roof 1. Due to the opened window frames 6 and the shape of the installing device 35 the installing device 35 can move on the roof 1 without damaging the lower roof sheet 11.

The invention is not limited to the embodiments shown in the drawings and described hereinbefore, which may be varied in different manners within the scope of the claims.

## Claims

1. A method of applying a transparent foil material (10, 11) on a gable roof (1) of a greenhouse, wherein the gable roof (1) comprises a roof frame including two gutter profiles (2), a ridge profile (3) and two intermediate profiles (4) extending parallel to each other, wherein the intermediate profiles (4) are located between the ridge profile (3) and the respective gutter profiles (2), wherein at either side of the ridge profile (3) the gutter profile (2), the ridge profile (3) and the intermediate profile (4) are interconnected through lateral beams (5) extending in transverse direction of said profiles (2-4), wherein the roof (1) also comprises two window frames (6), located at either side of the ridge profile (3), each window frame (6) having an upper window beam (7) which is mounted to the ridge profile (3) and rotatable with respect to the ridge profile (3) about a pivot axis (PA) extending in longitudinal direction of the ridge profile (3) and a lower window beam (8) located at a distance from the upper window beam (7), wherein each window frame (6) is rotatable between a closed position in which the lower window beam (8) lies at the intermediate profile (4) and an open position in which the lower window beam (8) lies at a distance from the intermediate profile (4) above the intermediate profile (4) and the window frame (6) has a less inclined orientation than in its closed position, wherein the method comprises the steps of:
positioning the window frames (6) in their open positions;
laying a single piece (10) of the foil material onto both window frames (6);
subsequently, fixing said piece (10) to the lower window beams (8),
wherein the piece (10) of the foil material is stretched in longitudinal direction of the ridge profile (3) before the step of fixing.

2. A method according to claim 1, wherein the window frames (6) have a substantially horizontal orientation when positioned in the open position.

3. A method according to any one of the preceding claims, wherein the piece (10) of the foil material is part of a continuous sheet (14), hence forming a first piece (10), wherein the first piece (10) is laid on the window frames (6) and fixed to at least the lower window beams (8) over a predetermined distance along the lower window beams (8) before laying and fixing a second piece of the continuous sheet (14) on the window frames (6) next to the fixed first piece (10).

4. A method according to claim 3, wherein the first and second pieces are fixed to the lower window beams (8) by mounting separate clamping elements (23) to the lower window beams (8) so as to clamp the foil material between the respective clamping elements (23) and the lower window beams (8), wherein each clamping element (23) has a length corresponding to said predetermined distance.

5. A method according to any one of the preceding claims, wherein the foil material is also fixed to the ridge profile (3).

6. A method according to claim 5, wherein the foil material is fixed to the ridge profile (3) through a ridge cover strip (24), wherein the ridge cover strip (24) and the ridge profile (3) are shaped such that upon fixing the foil material is clamped between the ridge cover strip (24) and the ridge profile (3), whereas the foil material is tensioned between the ridge profile (3) and the respective lower window beams (8).

7. A method according to any one of the preceding claims, wherein further pieces (11) of the foil material are laid onto the roof frame to cover respective lower roof sections, each extending from the intermediate profile (4) to the gutter profile (2) at either side of the ridge profile (3), and fixing the further pieces (11) to the gutter profiles (2) and the intermediate profiles (4).

8. A method according to claim 7, wherein the further pieces (11) of the foil material are stretched in longitudinal direction of the gutter profiles (2) before the step of fixing.

9. A method according to claim 7 or 8, wherein the further pieces (11) are part of respective continuous sheets (15), hence forming further first pieces, wherein the further first pieces are laid on the respective lower roof sections and fixed to the gutter profiles (2) and the intermediate profiles (4) over a predetermined distance along the gutter profiles (2) before laying and fixing further second pieces of the continuous sheets (15) on the lower roof sections next to the fixed further first pieces (11).

10. A method according to claim 9, wherein the further first and second pieces at the lower roof sections are fixed by mounting separate clamping elements (25, 27) to the intermediate profiles (4) and the gutter profiles (2) so as to clamp the foil material between respective clamping elements (25, 27), on the one hand, and the intermediate profiles (4) and the gutter profiles (2), on the other hand, wherein each clamping element (25, 27) has a length corresponding to said predetermined distance.

11. A foil supplying device (12) for performing the method according to any one of the preceding claims, comprising a bridge-shaped structure including a central portion (12') and two lateral portions (12") extending at both sides of the central portion (12') and below the central portion (12'), wherein lower ends of the lateral portions (12") are provided with wheels (13) for running on gutter profiles (2) of a gable roof (1) of a greenhouse, wherein the central portion (12') is provided with a roll (14) of foil material extending in horizontal direction and wherein each of the lateral portions (12") is provided with a roll (15) of foil material extending at an angle with respect to the horizontal,
wherein the rolls (14, 15) at the lateral portions (12") are located below the roll (14) at the central portion (12') and partly overlap the roll (14) at the central portion (12').

12. A foil supplying device (12) according to claim 11, wherein at least one of the wheels (13) and the rolls (14, 15) are provided with brakes (16).

## Patentansprüche

1. Verfahren zum Aufbringen eines transparenten Folienmaterials (10, 11) auf ein Giebeldach (1) eines Gewächshauses, wobei das Giebeldach (1) einen Dachrahmen mit zwei Rinnenprofilen (2), ein Firstprofil (3) und zwei sich parallel zu einander erstreckende Zwischenprofile (4) aufweist, wobei sich die Zwischenprofile (4) zwischen dem Firstprofil (3) und den jeweiligen Rinnenprofilen (2) befinden, wobei an jeder Seite des Firstprofils (3) das Rinnenprofil (2), das Firstprofil (3) und das Zwischenprofil (4) durch Seitenbalken (5), die sich in Querrichtung der Profile (2-4) erstrecken, miteinander verbunden sind, wobei das Dach (1) ferner zwei Fensterrahmen (6) aufweist, die sich an jeder Seite des Firstprofils (3) befinden, wobei jeder Fensterrahmen (6) einen oberen Fensterbalken (7), der an dem Firstprofil (3) montiert und in Bezug auf das Firstprofil (3) um eine sich in Längsrichtung des Firstprofils (3) erstreckende Schwenkachse (PA) drehbar ist, und einen unteren Fensterbalken (8) besitzt, der sich beabstandet von dem oberen Fensterbalken (7) befindet, wobei jeder Fensterrahmen (6) drehbar ist zwischen einer geschlossenen Position, in der der untere Fensterbalken (8) an dem Zwischenprofil (4) liegt, und einer offenen Position, in der der untere Fensterbalken (8) beabstandet von dem Zwischenprofil (4) oberhalb des Zwischenprofils (4) liegt und der Fensterrahmen (6) eine schwächer geneigte Ausrichtung als in seiner geschlossenen Position hat, wobei das Verfahren die folgenden Schritte umfasst:
Positionieren der Fensterrahmen (6) in ihren offenen Positionen;
Legen eines einzigen Stücks (10) des Folienmaterials auf beide Fensterrahmen (6);
anschließend Befestigen des Stücks (10) am unteren Fensterbalken (8),
wobei das Stück (10) des Folienmaterials vor dem Schritt des Befestigens in Längsrichtung des Firstprofils (3) gestreckt wird.

2. Verfahren nach Anspruch 1, wobei die Fensterrahmen (6) bei Positionierung in der offenen Position eine im Wesentlichen horizontale Ausrichtung haben.

3. Verfahren nach einem der vorstehenden Ansprüche, wobei das Stück (10) des Folienmaterials Teil einer Endlosfolie (14) ist, wodurch ein erstes Stück (10) gebildet wird, wobei das erste Stück (10) auf die Fensterrahmen (6) gelegt und zumindest an den unteren Fensterbalken (8) über eine vorgegebene Strecke entlang der unteren Fensterbalken (8) befestigt wird, bevor ein zweites Stück der Endlosfolie (14) neben dem befestigten ersten Stück (10) auf die Fensterrahmen (6) gelegt und befestigt wird.

4. Verfahren nach Anspruch 3, wobei die ersten und zweiten Stücke an den unteren Fensterbalken (8) durch Montieren gesonderter Klemmelemente (23) an den unteren Fensterbalken (8) befestigt werden, um das Folienmaterial zwischen die jeweiligen Klemmelemente (23) und die unteren Fensterbalken (8) zu klemmen, wobei jedes Klemmelement (23) eine Länge besitzt, die dem vorgegebenen Abstand entspricht.

5. Verfahren nach einem der vorstehenden Ansprüche, wobei das Folienmaterial ebenfalls am Firstprofil (3) befestigt wird.

6. Verfahren nach Anspruch 5, wobei das Folienmaterial durch einen Firstabdeckungsstreifen (24) am Firstprofil (3) befestigt wird, wobei der Firstabdeckungsstreifen (24) und das Firstprofil (3) derart geformt sind, dass beim Befestigen das Folienmaterial zwischen den Firstabdeckungsstreifen (24) und das Firstprofil (3) geklemmt wird, wohingegen das Folienmaterial zwischen dem Firstprofil (3) und den jeweiligen unteren Fensterbalken (8) gespannt wird.

7. Verfahren nach einem der vorstehenden Ansprüche, wobei weitere Stücke (11) des Folienmaterials auf den Dachrahmen gelegt werden, um jeweilige untere Dachabschnitte abzudecken, die sich jeweils von dem Zwischenprofil (4) zu dem Rinnenprofil (2) an jeder Seite des Firstprofils (3) erstrecken, und Befestigen der weiteren Stücke (11) an den Rinnenprofilen (2) und den Zwischenprofilen (4).

8. Verfahren nach Anspruch 7, wobei die weiteren Stücke (11) des Folienmaterials vor dem Schritt des Befestigens in Längsrichtung der Rinnenprofile (2) gedehnt werden.

9. Verfahren nach Anspruch 7 oder 8, wobei die weiteren Stücke (11) Teil jeweiliger Endlosfolien (15) sind, wodurch weitere erste Stücke gebildet werden, wobei die weiteren ersten Stücke auf die jeweiligen unteren Dachabschnitte gelegt und an den Rinnenprofilen (2) und den Zwischenprofilen (4) über eine vorgegebene Strecke entlang der Rinnenprofile (2) befestigt werden, bevor die weiteren zweiten Stücke der Endlosfolien (15) neben den befestigten, weiteren ersten Stücken (11) auf die unteren Dachabschnitte gelegt und befestigt werden.

10. Verfahren nach Anspruch 9, wobei die weiteren ersten und zweiten Stücke an den unteren Dachabschnitten durch Montieren gesonderter Klemmelemente (25, 27) an den Zwischenprofilen (4) und den Rinnenprofilen (2) befestigt werden, um das Folienmaterial einerseits zwischen jeweilige Klemmelemente (25, 27) und andererseits die Zwischenprofile (4) und die Rinnenprofile (2) zu klemmen, wobei jedes Klemmelement (25, 27) eine Länge besitzt, die dem vorgegebenen Abstand entspricht.

11. Folienzufuhrvorrichtung (12) zur Durchführung des Verfahrens nach einem der vorstehenden Ansprüche, aufweisend eine brückenförmige Struktur mit einem mittleren Abschnitt (12') und zwei seitlichen Abschnitten (12"), die sich auf beiden Seiten des mittleren Abschnitte (12') und unterhalb des mittleren Abschnitts (12') erstrecken, wobei untere Enden der seitlichen Abschnitte (12") mit Rädern (13) versehen sind, um auf Rinnenprofilen (2) eines Giebeldachs (1) eines Gewächshauses zu laufen, wobei der mittlere Abschnitt (12') mit einer Rolle (14) von Folienmaterial versehen ist, die sich in Horizontalrichtung erstreckt, und wobei jeder der seitlichen Abschnitte (12") mit einer Rolle (15) von Folienmaterial versehen ist, die sich in Bezug auf die Horizontale in einem Winkel erstreckt,
wobei sich die Rollen (14, 15) an den seitlichen Abschnitten (12") unterhalb der Rolle (14) am mittleren Abschnitt (12') befinden und die Rolle (14) am mittleren Abschnitt (12') teilweise überlappen.

12. Folienzufuhrvorrichtung (12) nach Anspruch 11, wobei zumindest eines der Räder (13) und der Rollen (14, 15) mit Bremsen (16) versehen sind.

## Revendications

1. Procédé d'application d'un matériau à feuille transparente (10, 11) sur un toit à pignon (1) d'une serre, dans lequel le toit à pignon (1) comprend une charpente de toit comportant deux profilés de gouttière (2), un profilé de faîte (3) et deux profilés intermédiaires (4) s'étendant parallèlement l'un à l'autre, dans lequel les profilés intermédiaires (4) sont situés entre le profilé de faîte (3) et les profilés de gouttière (2) respectifs, dans lequel de chaque côté du profilé de faîte (3), le profilé de gouttière (2), le profilé de faîte (3) et le profilé intermédiaire (4) sont reliés par des poutres latérales (5) s'étendant en direction transversale desdits profilés (2 à 4), dans lequel le toit (1) comprend également deux cadres de fenêtre (6), situés de chaque côté du profilé de faîte (3), chaque cadre de fenêtre (6) ayant une poutre de fenêtre supérieure (7) qui est montée sur le profilé de faîte (3) et peut tourner par rapport au profilé de faîte (3) autour d'un axe de pivotement (PA) s'étendant en direction longitudinale du profilé de faîte (3) et une poutre de fenêtre inférieure (8) située à une distance de la poutre de fenêtre supérieure (7), dans lequel chaque cadre de fenêtre (6) peut tourner entre une position fermée dans laquelle la poutre de fenêtre inférieure (8) se trouve au niveau du profilé intermédiaire (4) et une position ouverte dans laquelle la poutre de fenêtre inférieure (8) se trouve à une distance du profilé intermédiaire (4) au-dessus du profilé intermédiaire (4) et le cadre de fenêtre (6) a une orientation moins inclinée que dans sa position fermée, dans lequel le procédé comprend les étapes de :
positionnement des cadres de fenêtre (6) dans leurs positions ouvertes ;
pose d'une seule pièce (10) du matériau à feuille sur les deux cadres de fenêtre (6) ;
ensuite, fixation de ladite pièce (10) aux poutres de fenêtre inférieures (8),
dans lequel la pièce (10) du matériau à feuille est étirée en direction longitudinale du profilé de faîte (3) avant l'étape de fixation.

2. Procédé selon la revendication 1, dans lequel les cadres de fenêtre (6) ont une orientation sensiblement horizontale lorsqu'ils sont positionnés dans la position ouverte.

3. Procédé selon l'une quelconque des revendications précédentes, dans lequel la pièce (10) du matériau à feuille fait partie d'une tôle continue (14), formant donc une première pièce (10), dans lequel la première pièce (10) est posée sur les cadres de fenêtre (6) et fixée au moins aux poutres de fenêtre inférieures (8) sur une distance prédéterminée le long des poutres de fenêtre inférieures (8) avant la pose et la fixation d'une seconde pièce de la tôle continue (14) sur les cadres de fenêtre (6) près de la première pièce (10) fixée.

4. Procédé selon la revendication 3, dans lequel les première et seconde pièces sont fixées aux poutres de fenêtre inférieures (8) par montage d'éléments de serrage (23) séparés sur les poutres de fenêtre inférieures (8) de façon à serrer le matériau à feuille entre les éléments de serrage (23) respectifs et les poutres de fenêtre inférieures (8), dans lequel chaque élément de serrage (23) a une longueur correspondant à ladite distance prédéterminée.

5. Procédé selon l'une quelconque des revendications précédentes, dans lequel le matériau à feuille est également fixé au profilé de faîte (3).

6. Procédé selon la revendication 5, dans lequel le matériau à feuille est fixé au profilé de faîte (3) par une bande couvrante de faîte (24), dans lequel la bande couvrante de faîte (24) et le profilé de faîte (3) sont formés de sorte que lors de la fixation, le matériau à feuille soit serré entre la bande couvrante de faîte (24) et le profilé de faîte (3), tandis que le matériau à feuille est tendu entre le profilé de faîte (3) et les poutres de fenêtre inférieures (8) respectives.

7. Procédé selon l'une quelconque des revendications précédentes, dans lequel des pièces supplémentaires (11) du matériau à feuille sont posées sur la charpente de toit pour couvrir des sections de toit inférieures respectives, s'étendant chacune du profilé intermédiaire (4) au profilé de gouttière (2) de chaque côté du profilé de faîte (3), et fixant les pièces supplémentaires (11) aux profilés de gouttière (2) et aux profilés intermédiaires (4).

8. Procédé selon la revendication 7, dans lequel les pièces supplémentaires (11) du matériau à feuille sont étirées en direction longitudinale des profilés de gouttière (2) avant l'étape de fixation.

9. Procédé selon la revendication 7 ou 8, dans lequel les pièces supplémentaires (11) font partie de tôles continues (15) respectives, formant donc des premières pièces supplémentaires, dans lequel les premières pièces supplémentaires sont posées sur les sections de toit inférieures respectives et fixées aux profilés de gouttière (2) et aux profilés intermédiaires (4) sur une distance prédéterminée le long des profilés de gouttière (2) avant la pose et la fixation de secondes pièces supplémentaires des tôles continues (15) sur les sections de toit inférieures près des premières pièces supplémentaires (11) fixées.

10. Procédé selon la revendication 9, dans lequel les première et seconde pièces supplémentaires au niveau des sections de toit inférieures sont fixées par montage d'éléments de serrage (25, 27) séparés sur les profilés intermédiaires (4) et les profilés de gouttière (2) de façon à serrer le matériau à feuille entre des éléments de serrage (25, 27) respectifs, d'une part, et les profilés intermédiaires (4) et les profilés de gouttière (2), d'autre part, dans lequel chaque élément de serrage (25, 27) a une longueur correspondant à ladite distance prédéterminée.

11. Dispositif d'alimentation en feuille (12) pour réaliser le procédé selon l'une quelconque des revendications précédentes, comprenant une structure en forme de pont comportant une portion centrale (12') et deux portions latérales (12") s'étendant des deux côtés de la portion centrale (12') et en dessous de la portion centrale (12'), dans lequel des extrémités inférieures des portions latérales (12") sont pourvues de roues (13) pour passer sur des profilés de gouttière (2) d'un toit à pignon (1) d'une serre, dans lequel la portion centrale (12') est pourvue d'un rouleau (14) de matériau à feuille s'étendant en direction horizontale et dans lequel chacune des portions latérales (12") est pourvue d'un rouleau (15) de matériau à feuille s'étendant selon un angle par rapport à l'horizontale,
dans lequel les rouleaux (14, 15) au niveau des portions latérales (12") sont situés en dessous du rouleau (14) au niveau de la portion centrale (12') et chevauchent en partie le rouleau (14) au niveau de la portion centrale (12').

12. Dispositif d'alimentation en feuille (12) selon la revendication 11, dans lequel au moins l'une des roues (13) et les rouleaux (14, 15) sont pourvus de freins (16).
